# EUROPEAN PATENT SPECIFICATION

(11) **EP 3 981 668 B1**
(45) Date of publication and mention of the grant of the patent: **19.04.2023**
(21) Application number: 20200797.7
(22) Date of filing: 08.10.2020
(51) Int. Cl.: B62B 7/12, B62B 7/06, B62B 7/10, B62B 7/14, B62B 7/04

(54) **STROLLER**
KINDERWAGEN
POUSSETTE

(43) Date of publication of application: 13.04.2022
(73) Proprietor: Yoo, Sang Jin, Seoul 05607 (KR)
(72) Inventor: Yoo, Sang Jin, Seoul 05607 (KR)
(74) Representative: Sach, Greg Robert

(56) References cited:
- DE-A1- 1 605 870
- KR-A- 20090 091 548
- KR-B1- 102 031 279

## Description

### BACKGROUND OF THE INVENTION

### (a) Field of the invention

The present invention relates to a stroller and, more particularly, to a stroller having a moving structure that allows conversion to a bicycle or a kickboard.

### (b) Description of the Related Art

In general, when walking or going out with preschool children including babies and toddlers, the most basic thing they need may be a stroller. However, the stroller has a basic structure in which a wheel is coupled to a lower portion and a seat is coupled to a central portion of a frame with a handle on the upper portion, and a storage body capable of easily storing lightweight and small articles such as children's products may be provided in the lower part of the frame located under the seat.

Strollers are divided into a stroller with a fixed frame or a stroller with a foldable frame based on the above structure. The stroller with a fixed frame is limited in use because it can be used for stroller purposes only, so there is a disadvantage that its utility is deteriorated.

In addition, a stroller with a foldable frame occupies a lot of space because the folding structure is complicated or the folding structure is bulky. Further, it is not easy to carry a stroller in a passenger car or fold and store it when not in use, and there was a problem that it is stored or left in an unfolded state.

Meanwhile, as the use period of the stroller is shortened, the stroller is not discarded due to a breakdown, etc., but in most cases, the stroller is discarded after elapse of the age of use of the stroller, even though it is almost new. Therefore, there is a problem that serious resource waste and environmental pollution are caused by such discarded or unused strollers.

### [Prior Art Literature]

### [Patent Literature]

Korean Unexamined Patent Publication No. 2009-0129335 (published on December 16, 2009)
KR 10-2031279 B1 discloses a stroller formed of a bicycle structure, which includes: a seat part including a seat and a seat receiving part receiving the seat; a connecting frame part comprising a first connecting frame supporting the seat at both sides and comprising a vertical portion and a horizontal portion and a second connecting frame having a U shape comprising a vertical portion and a horizontal portion, wherein the vertical portion is rotationally connected with respect to the first connecting frame; a main frame in which the first connecting frame is coupled to a front end portion and the second connecting frame is coupled to a back end portion so that the connecting frame part is mounted thereon and in which a saddle is installed; a front wheel installed on a front lower portion of the main frame; and a back wheel installed on a back lower portion of the main frame. DE 1605870 A1 discloses a collapsible chassis for strollers, in which the bendable struts between the legs of the slide and the support frame and the base frame secure the chassis in its position of use.

### SUMMARY OF THE INVENTION

### [Technical Problem]

Therefore, the present invention has been designed to solve the above-mentioned problems, and it is therefore an object of the present invention to provide a stroller having a moving structure that allows conversion to a bicycle or kickboard. It is another object of the present invention to provide a stroller that can be easily folded by a single operation.

### [Technical Solution]

The stroller according to the present invention is defined in claim 1, and comprises: a seat portion including a seat; a support frame including an upper support frame supporting the seat, a lower support frame rotatably connected to the upper support frame by a hinge portion, and a frame support that maintains a fixed state between the upper support frame and the lower support frame; and a moving structure to which the support frame is detachably connected, the moving structure including a guide frame that allows the lower support frame to fold and support and is extended in the length direction, a drive frame including a rear wheel coupling portion having a front wheel coupling portion connected in a '¬' shape to the front part of the guide frame and a rear wheel coupling portion having coupling shaft portions formed on both sides of the rear end of the guide frame, a front wheel supported by a support fork to be installed on the front wheel coupling portion, and a rear wheel installed on the rear wheel coupling portion through a rear wheel connecting shaft.

The lower support frame includes a first frame rotatably connected to the upper support frame by a hinge portion, and a second frame rotatably hinged to the first frame, and the second frame is slidably mounted on the guide frame and supported to be foldable with respect to the first frame.

The guide frame includes a moving guide hole to guide: a first guide portion extending in the length direction and receiving a roller to be movable in the front-rear direction therein, a second guide portion coupled to the first guide portion, and a joint portion having a coupling sleeve to which the second frame of the lower support frame and the roller are coupled.

The support fork is formed in the form of a module in which the front wheel is connected, and is detachably coupled to the upper end part of the front wheel coupling part, and the support fork includes a pair of support fork portions, so that a pair of front wheels are installed.

The frame support is installed between the upper support frame and the first frame of the lower support frame, and a locking device slidably mounted on the upper support frame is provided on the upper end, and in response to the unlocking of the locking device, the upper end of the frame support moves along the upper support frame.

The stroller includes a frame connecting mechanism which is installed on the rear wheel connecting shaft and to which the first frame of the lower support frame is fixed.

The frame connecting mechanism includes a rear wheel locking portion inserted and installed into the rear wheel connecting shaft and connected to the rear wheel to lock the rear wheel, and a suspension that is formed integrally with the rear wheel locking portion, is coupled to the lower end of the first frame, and supports the first frame in a buffer manner.

The rear wheel connecting portion includes: a first shaft extending between the coupling shaft portions, and having both ends extending outward through the center of the coupling shaft portion; a brake wheel rotatably installed on the first shaft; and a pressing plate hingedly connected to the guide frame, disposed at the upper portion of the brake wheel, and selectively contacting the brake wheel to enable braking of the brake wheel.

The rear wheel connecting shaft has a shaft coupling portion integrally coupled with the coupling shaft portion at one side end, and has a second shaft rotating at the other side end, and the rear wheel is coupled to the second shaft.

The rear wheel connecting shaft includes a shaft coupling portion integrally rotatably coupled with the first shaft at one side end, and a second shaft integrally rotating with the shaft coupling portion at the other side end, and in which the rear wheel is coupled to the second shaft.

The upper frame is divided into two and foldably connected by a hinge portion, and a handle provided at the upper end portion of the upper frame is provided with a lever for controlling the rotation of the hinge portion of the divided portion.

The upper end portion of the drive frame is provided with a handle coupling portion to which a handle enabling steering of the support fork can be coupled.

The moving structure further includes a saddle frame coupled to the drive frame in a state in which the support frame is separated, and a saddle coupled to the saddle frame, the support fork further includes a footboard connected to the central axis of the front wheel, and the handle is coupled to the handle coupling portion, and can be used as a three-wheeled bicycle.

The saddle frame includes a horizontal plate and a vertical plate hingedly connected to the horizontal plate, and is formed in a form that can be folded and stored when not in use.

The moving structure is configured such that the rear wheel is directly connected to the rear wheel connecting portion of the drive frame in a state in which the support frame is separated, the rear wheel is installed to rotate together with the first shaft, and the handle is coupled to the handle coupling portion, and thus can be used as a kickboard.

It may further include a kickboard footboard fitted to the guide frame.

The handle has a multi-stage steering shaft capable of height adjustment at a lower end, and a lower end of the steering shaft is coupled to the handle coupling portion.

The handle includes a grip portion formed to be adjustable in length at both ends, a handle fixing portion is formed in the seat portion so that the handle is fixed and used safely, and the handle is coupled to the handle fixing portion or the handle coupling portion.

### [ADVANTAGEOUS EFFECTS]

In the stroller having the configuration as described above, the moving structure of the stroller has a drive frame that can be a frame of a bicycle or a kickboard, and thereby, the stroller can be converted into a bicycle or a kickboard. Therefore, when a child passes the age of use of the stroller, the stroller can be used as a three-wheeled bicycle or a kickboard without discarding it, thereby reducing costs as well as saving resources.

In addition, there is an effect that can be easily folded and stored when used as a stroller.

### BRIEF DESCRIPTION OF THE DRAWINGS

FIG. 1 is a perspective view showing a stroller according to the present invention.
FIG. 2 is a side view showing a stroller according to the present invention.
FIG. 3 is an exploded perspective view for explaining a moving structure according to the present invention.
FIG. 4 is an exploded perspective view showing a coupled state of the rear wheel connecting shaft and the rear wheel connecting shaft in the moving structure of the stroller according to the present invention.
FIG. 5 is a view for explaining a support fork according to the present invention.
FIG. 6 is an exploded perspective view showing a state in which the moving structure of the stroller according to the present invention is converted into a three-wheeled bicycle.
FIG. 7 is a view for explaining a handle according to the present invention.
FIG. 8 is a perspective view illustrating a state in which the moving structure of the stroller according to the present invention is converted into a kickboard.
FIG. 9 is an exploded perspective view showing a coupled state of a footboard and a guide frame in the moving structure used as a kickboard according to the present invention.
FIG. 10 is an exploded perspective view showing a coupled state of a rear wheel and a first shaft in the moving structure used as a kickboard according to the present invention.
FIG. 11 is a view showing a folding operation sequence of the stroller according to the present invention.

### DETAILED DESCRIPTION OF THE EMBODIMENTS

Since various modifications may be made to the present invention and the present invention may have various forms, specific embodiments will be illustrated and described in detail below.

The terms are used only to discriminate one constituent element from another component. Terms used herein are used only to describe specific embodiments, and are not intended to limit the present invention, which is defined by the claims.

Hereinafter, embodiments of the present invention will be described with reference to the accompanying figures.

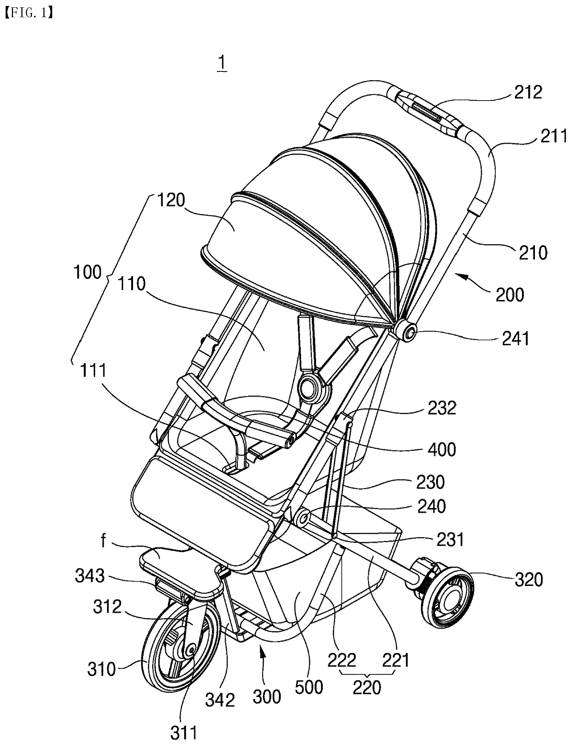

FIG. 1 is a perspective view showing a stroller according to the present invention,

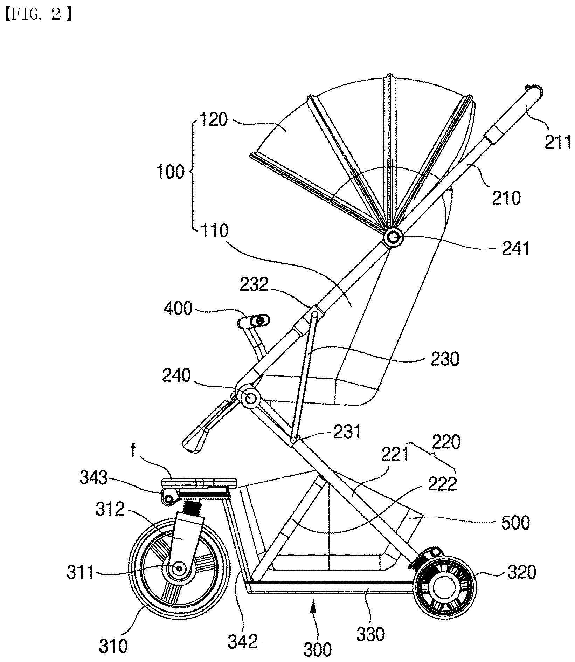

and FIG. 2 is a side view showing a stroller according to the present invention.

As shown in FIGS. 1 and 2, the stroller 1 according to the present invention includes a seat portion 100, a support frame 200, and a moving structure 300.

The seat portion 100 is formed so that infants can ride on it. The seat portion 100 may include a seat 110 and a sun shade 120.

The seat 110 is a part where infants ride and may be formed of a fabric material. A handle fixing portion 111 for fixing a handle 400 may be formed on the lower side of the seat 110. The handle fixing portion 111 may be coupled to and fixed to the lower end of the upper support frame 210. The handle 400 is coupled to the handle fixing portion 111 through a hole formed in the bottom surface of the seat 110, and the handle 400 is detachably coupled to the handle fixing portion 111. When used as a stroller 1, the handle 400 is disposed together with the seat 110 and used as a safety bar, and when converted to the bicycle 2 or the kickboard 3, it can be separated from the handle fixing part 111 and connected to the front wheel coupling part 342 of the drive frame 330 for steering.

The sun shade 120 is detachably installed on the seat 110 and is formed so as to block sunlight and rain and so protect the infant.

The support frame 200 includes an upper support frame 210, a lower support frame 220, and a frame support 230.

The support frame 200 is coupled to the moving structure 300 at the lower end portion and provided with a handle 211 at the upper end portion to support the seat 110. The support frame 200 is detachably coupled to the moving structure 300.

The upper support frame 210 has an inverted 'U' shape in which the handle 211 is provided at the upper end portion, and supports the seat 110 from both sides.

The lower support frame 220 is hingedly connected to the upper support frame 210 via a hinge portion 240, and the moving structure 300 is coupled to the lower end portion.

The hinge portion 240 is installed on a shaft in which both sides of the lower end portion of the upper support frame 210 and both sides of the upper end portion of the lower support frame 220 are mutually coupled and shared, and rotatably connects the upper support frame 210 and the lower support frame 220. By the hinge portion 240, the upper support frame 210 can be folded with respect to the lower support frame 220, and can adjust the angle of the upper support frame 210.

The frame support 230 is installed so as to be supported between the upper support frame 210 and the lower support frame 220. The frame support 230 is formed so as to maintain a fixed state between the upper support frame 210 and the lower support frame 220. The lower end of the frame support 230 is rotatably supported by a hinge 231 on the lower support frame 220, and the other side is installed to be slidably moved along the length direction of the upper support frame 210.

The frame support 230 has a locking device 232 at the upper end, which is a part that is coupled with the upper support frame 210. During the operation of the stroller 1, the frame support 230 is kept in a fixed state with respect to the upper support frame 210 by locking a locking device 232. On the other hand, when the stroller 1 is folded, the locking device 232 is unlocked so that the frame support 230 slidably moves along the upper support frame 210, and the upper support frame 210 can be rotated with respect to the first frame 221 based on the hinge portion 240, so that it can be folded. The locking device 232 is a locking means that is locked or unlocked with respect to the upper support frame 210, and various types of locking devices may be adopted and used.

The lower support frame 220 according to the present invention includes a first frame 221 and a second frame 222.

The first frame 221 is rotatably connected to the upper support frame 210 by a hinge part 240, and the lower side is connected on the rear wheel connecting shaft 321 which axially connects the rear wheel 320. A frame connecting mechanism 322 for fixing the lower end of the first frame 221 is provided on the rear wheel connecting shaft 321.

The second frame 222 is hingedly connected so that the upper side is rotatable with respect to the middle portion of the first frame 221, and the lower side is installed so as to be supported movably on the guide frame 331 of the moving structure 300.

The support frame 200 configured in this way is configured so as to be foldable with respect to the moving structure 300 in a state in which the seats 110 are coupled together.

Meanwhile, the upper support frame 210 is divided into two and formed so as to be foldable. The hinge portion 241 is formed at the divided portion. The handle 211 is provided with a lever 212 that controls the rotation of the hinge portion 241 at the divided portion. By operating the lever 212, the upper and lower parts of the upper support frame 210 are foldable with respect to each other,

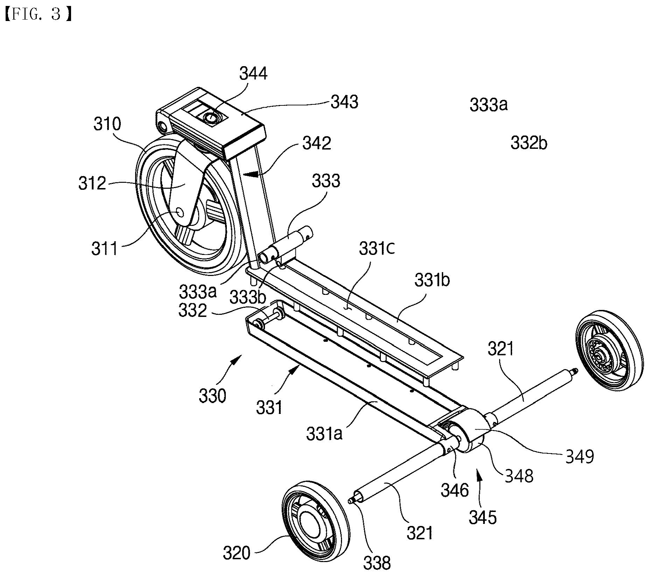

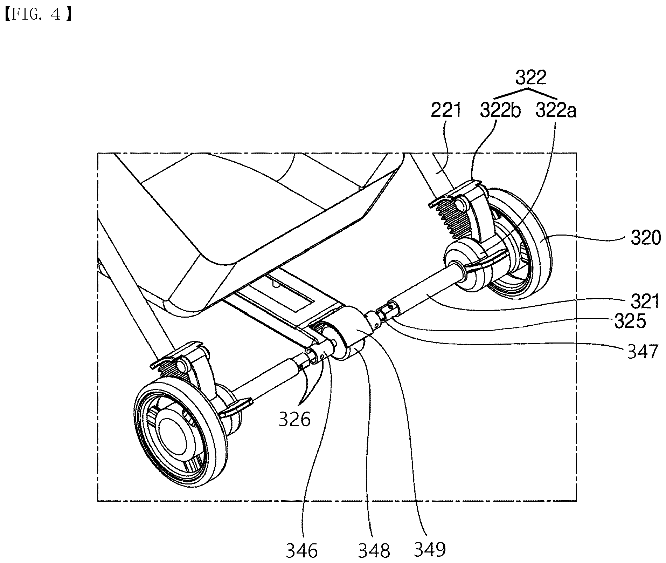

FIG. 3 is an exploded perspective view showing a moving structure 300 of the stroller according to the present invention and is shown in a state where the frame connecting mechanism 322 is omitted. FIG. 4 is an exploded perspective view showing a coupled state of the rear wheel connecting shaft and the rear wheel connecting shaft in the moving structure of the stroller according to the present invention.

The moving structure 300 will be described with reference to FIGS. 3 and 4.

The moving structure 300 is a part that supports and moves the support frame 220 of the stroller 1.

The moving structure 300 of the stroller 1 includes a drive frame 330, and a front wheel 310 and a rear wheel 320 coupled to the drive frame 330. The drive frame 330 may be a frame of a bicycle 2 or a kickboard 3.

The drive frame 330 includes a guide frame 331 that supports the support frame 200 and extends in the length direction, a front wheel coupling portion 342 to which the front wheel 310 is connected, and a rear wheel coupling portion 345 to which the rear wheel 320 is connected.

The guide frame 331 supports so as to slidably move the second frame 222 of the lower support frame 220 along the length direction of the guide frame 331. The guide frame 331 has a roller 332 therein, and a second frame 222 is connected to the roller 332 to move in the length direction of the guide frame 331. The movement of the second frame 222 by the roller 332 is related to an operation in which the support frame 200 of the stroller is folded with respect to the moving structure 300.

In addition, a basket 500 capable of storing an article when used as a stroller 1 may be placed on the guide frame 331.

Referring to FIG. 3, the guide frame 331 includes a first guide portion 331a and a second guide portion 331b.

The first guide portion 331a extends in the length direction, and the roller 332 is housed therein so as to be movable in the front-rear direction.

The second guide portion 331b is detachably mounted to the first guide portion 331a. The second guide portion 331b is formed of a plate-shaped member coupled to the upper portion of the first guide portion 331a.

The guide frame 331 includes a joint portion 333 that connects the roller 332 and the second frame 222. A moving guide hole 331c is formed on the upper surface of the second guide part 331b to guide the movement of the joint portion 333 coupled with the roller 332 disposed on the first guide portion 331a.

The joint portion 333 includes a first coupling sleeve 333a to which the second frame 222 is coupled to an upper end, and a second coupling sleeve 333b to which the rollers 332 installed on the first guide portion 331a are coupled to the lower end. The second frame 222 and the roller 332 are integrally coupled to each other by the joint portion 333 to operate integrally. Accordingly, the second frame 222 of the lower support frame 220 may slidably move along the guide frame 331 in the front-rear direction.

The moving guide hole 331c is illustrated as being formed on the upper surface of the second guide part 331b, without being limited thereto, and may be formed as a side surface of the first guide portion 331a. At this time, the coupling sleeve 333b coupled with the second frame 222 of the joint portion 333 may be formed to correspond to the moving guide hole 331c formed on the side surface of the first guide portion 331a.

The drive frame 330 includes a front wheel coupling portion 342. The front wheel coupling portion 342 is provided in the front part of the guide frame 331 to support the front wheel 310.

The front wheel coupling portion 342 is formed in a '¬' shaped frame, extends to an upper portion so as to be inclined from the front stage of the guide frame 331, and includes an upper end portion 343 to which a support fork 312 supporting the front wheel 310 is coupled.

The front wheel 310 is connected to the upper end portion 343 in a state of being coupled to the support fork 312. The support fork 312 rotatably supports the front wheel 310.

The upper end 343 is provided with a handle coupling portion 344 to which the handle 400 is coupled.

The handle coupling portion 344 is a portion extending from the support fork 312, and is coupled to the handle 400 to enable steering of the front wheel 310. The handle coupling portion 344 may be formed in the form of a coupling hole formed in the shaft portion of the support fork 312. The handle 400 is coupled when converting the moving structure 300 of the stroller 1 into a bicycle 2 or a kickboard 3. The handle 400 may be a handle 400 separated from the seat portion 100 of the stroller. The handle 400 is detachably coupled to the handle coupling portion 344.

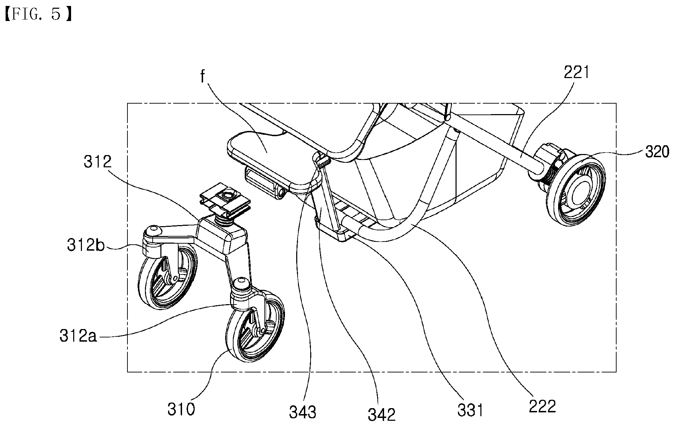

In FIGS. 1 to 3, the support fork 312 is shown in the form of a module having one front wheel 310, but is not necessarily limited thereto, and as shown in FIG. 5, it may be a module having a pair of front wheels 310. As shown in FIG. 5, the support fork 312 has a pair of support fork portions 312a and 312b, and the front wheel 310 may be coupled to each of the support fork portions 312a and 312b.

The support fork 312 may be detachably coupled to the upper end portion 343 in the form of a module coupled with the front wheel 310. For example, the support fork 312 may be detachably coupled to the upper end portion 343 through a groove formed in the front part of the upper end portion 343.

FIG. 3 shows a state in which a support fork 312 in the form of a module having one front wheel 310 is inserted and coupled to the upper end 343. When trying to convert to a form having a pair of front wheels 310, the support fork 312 shown in FIG. 3 is separated from the upper end 343, and the support fork 312 in the form of a module having a pair of front wheels 310 shown in FIG. 5 may be inserted and coupled to the upper end 343.

As shown in FIGS. 1 and 2, the footboard f may be coupled to the upper end 343 of the front wheel coupling portion 342. For this purpose, a fastening portion (not shown) for fixing the footboard f may be formed at the upper end 343. The footboard f is formed so that the foot of the infant can be placed in the stroller 1. When converting a stroller 1 into a three-wheeled bicycle 2 and a kickboard 3, the footboard f is not used in the three-wheeled bicycle 2 and the kickboard 3, and thus, the footboard f is separated. As will be described later, the footboard f can be used as a saddle (s) in the three-wheeled bicycle 2.

As shown in FIGS. 3 and 4, a rear wheel coupling portion 345 for connecting the rear wheel 320 is formed at the rear end of the guide frame 331.

The rear wheel coupling portion 345 includes a coupling shaft portion 346 formed on both sides at the rear end of the guide frame 331. The rear wheel 320 may be coupled to the coupling shaft portion 346 via the rear wheel connecting shaft 321, or may be directly coupled to the rear wheel 320.

The rear wheel coupling portion 345 includes a cylindrical brake wheel 348 rotatably installed by the first shaft 347, and a pressing plate 349 installed on the upper portion of the brake wheel 348.

The brake wheel 348 is installed integrally with the first shaft 347 between the coupling shaft portions 346 on both sides. The first shaft 347 extends between the coupling shaft portions 346 on both sides, and the both ends extend outwardly through the center of the coupling shaft portion 346. The first shaft 347 is coupled so as to operate together with the brake wheel 348.

The pressing plate 349 is formed to be bent along the upper portion of the brake wheel 348 and is hingedly coupled to the guide frame 331 at the rear end. The pressing plate 349 is elastically supported in a direction away from the brake wheel 348. Therefore, only when the user presses the pressure plate 349, it contacts the brake wheel 348 to perform braking. A friction plate (not shown) may be attached to the inside of the pressing plate 349, that is, on a surface facing the brake wheel 348 in order to improve a braking force. When the pressing plate 349 moves downward, a friction force is generated between the pressing plate 349 and the brake wheel 348 to perform braking. Since the brake wheel 348 rotates together with the first shaft 347, when a braking force is applied to the brake wheel 348, a braking force is also applied to a portion coupled to operate with the first shaft 347.

The brake wheel 348 and the pressing plate 349 form a foot brake device to enable stable braking.

The rear wheel 320 in the stroller 1 is coupled to a rear wheel connecting shaft 321 and a frame connecting mechanism 322.

The rear wheel connecting shaft 321 is coupled to each of the coupling shaft portions 346 on both sides. A first shaft 347 penetrating the center of the brake wheel 348 extends to the coupling shaft portion 346 formed at both ends from the rear side of the guide frame 331. A rear wheel connecting shaft 321 is coupled to each of the first shafts 347 extending outwardly through the center of the coupling shaft portion 346. The rear connecting shaft 321 is coupled when the moving structure 300 is used for a stroller 1 and a three-wheeled bicycle 2.

The wheel connecting shaft 321 has a shaft coupling portion 325 coupled to the coupling shaft portion 346 on one side, and has a second shaft 338 coupled to the rear wheel 320 on the other side. The coupling shaft portion 346 and the shaft coupling portion 325 inserted into the coupling shaft portion 346 may be formed with a fastening hole 326 that can be integrally fastened through a fastening member such as a bolt. Bolts can be fastened and fixed in a state where the shaft coupling portion 325 and the coupling shaft portion 346 of the rear wheel connecting shaft 321 are recession/projection-fitted and the fastening holes are matched. At this time, the second shaft 338 is connected so as to rotate together with the first shaft 347.

The second shaft 338 is supported and rotated in the rear wheel connecting shaft 321 by a shaft supporting means (not shown) such as a bearing.

As shown in FIG. 4, the frame connecting mechanism 322 is installed on one side of the rear wheel connecting shaft 321. The first frame 221 of the lower support frame 220 is supported on the rear wheel connecting shaft 321 by a frame connecting mechanism 322.

The frame connecting mechanism 322 is inserted and installed into the suspension 322b and the rear wheel connecting shaft 321 for supporting the lower end of the first frame 221 in a bufferable manner, and includes a rear wheel locking portion 322a that can be coupled to the rear wheel 320 to lock the rear wheel 320.

The suspension 322b is integrally formed with the rear wheel locking portion 322a, and is formed so that the lower end of the first frame 221 can be fixed. The suspension 322b may be provided with a fixing means for preventing the first frame 221 from being arbitrarily detached in a state of being inserted.

The rear wheel locking portion 322a includes a locking lever, and is configured so that the rear wheel 320 can be locked by the operation of the locking lever. The rear wheel locking portion 322a is used in a known stroller.

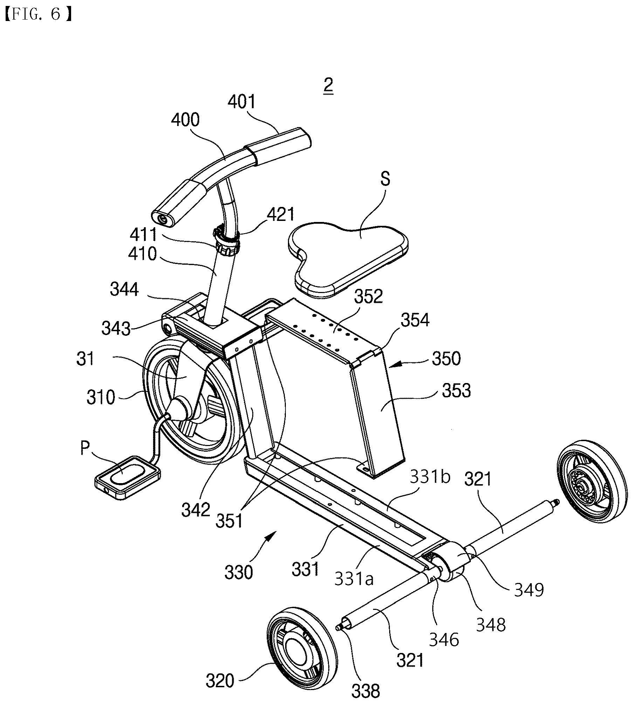

The stroller 1 may convert the moving structure 300 into a bicycle 2 or a kickboard 3 in a state in which the seat portion 100 and the support frame 200 are separated. At this time, the drive frame 310 becomes the frame of the bicycle 2 or the kickboard 3, and some components of the moving structure 300 may be separated, moved, coupled, or added. Such a conversion method will be described below with reference to FIGS. 6 to 10.

FIG. 6 is an exploded perspective view for explaining a process of converting the moving structure of the stroller 1 according to the present invention into a three-wheeled bicycle 2.

Referring to FIG. 6, in order to convert the stroller 1 into a three-wheeled bicycle 2, first, the seat portion 100 and the support frame 200 are separated and removed from the moving structure 300.

When removing the support frame 200 from the moving structure 300, a roller 332 and a joint portion 333 supporting the second frame 222 to be movable with respect to the guide frame 331, and a frame connecting mechanism 322 connecting the first frame 221 to the rear wheel connecting shaft 321 can be removed together.

As shown in FIG. 6, the moving structure 300 for a bicycle includes a drive frame 320, a front wheel 310 coupled and installed to the support fork 312 to the front wheel coupling portion 342, and a rear wheel 320 that is connected and installed to the rear wheel coupling portion 345 by the rear wheel connecting shaft 321. Compared with the moving structure 300 for the stroller 1, it is a state in which the roller 332, the joint portion 333, and the frame connecting mechanism 322 are removed.

For conversion to a three-wheeled bicycle 2, the handle 400 is connected to the handle coupling portion 344 provided at the upper end portion 343 of the front wheel coupling portion 342.

The handle 400 may be coupled to the handle coupling portion 344 in a state in which the steering shafts 410 and 420 are coupled on the lower side. When used as a stroller 1, the handle 400 is fixed to the handle fixing portion 111 and disposed on the seat portion 100. When used as a bicycle 2, the handle 400 is separated from the handle fixing portion 111 and the steering shafts 410 and 420 are coupled to the handle coupling part 344 in a state of being connected to the lower end.

The steering shafts 410 and 420 are coupled to the support fork 312 via the handle coupling portion 344, and steering of the current 310 is made possible by a handle 400.

The steering shafts 410 and 420 may be multi-stage steering shafts such that the plurality of steering shafts 410 and 420 are length adjusted. One steering shaft 420 may be inserted or pulled out into another adjacent steering shaft 410, so that the length can be adjusted in multiple stages. For example, the steering shafts 410 and 420 with different diameters are applied, but one steering shaft 410 forms a first fixing portion 411 on the upper end to enable length adjustment of the other steering shaft 420. The other steering shaft 420 also forms a second fixing portion 421 on the upper end portion to enable the insertion depth of the handle 400. The first fixing portion 411 and the second fixing portion 421 are locking means that are fixed or released, and various locking means may be adopted and used.

Pedals p are installed on the front wheel central shaft 311 that supports the front wheel 310 on both sides of the support fork 312. The pedal (p) becomes a means for rotating the front wheel 310 when using the moving structure 300 as a three-wheeled bicycle.

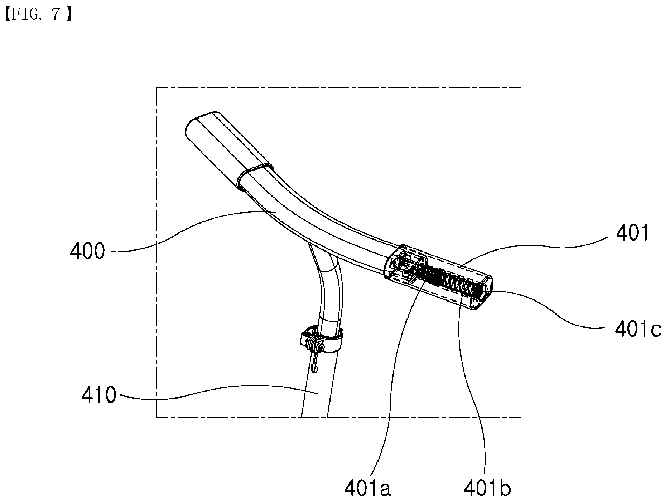

According to an embodiment of the present invention, the handle 400 includes a grip portion 401 formed to be adjustable in length. FIG. 7 is a view for explaining the coupling relationship of the grip portion 401 in the handle 400 according to an embodiment of the present invention.

Referring to FIG. 7, a bolt portion 401a supported by the body of the handle 400 is provided inside the grip portion 401, a nut part 401b corresponding to the bolt portion is provided inside of the grip part 401, and a bolt groove 401c for length adjustment is provided at an outer end of the grip part 401. By turning the bolt groove 401c formed at the end of the grip portion 401, the length of the grip part 401 protruding toward both sides of the handle 400 may be adjusted. When the handle 400 is used as a safety bar in a stroller, the protruding length of the grip portion 401 is adjusted to the maximum short length, and when the handle 400 is used for steering a bicycle or a kickboard, the protruding length of the grip part 401 can be adjusted to the maximum length.

In the embodiment of the present invention, the grip portion 401 of the handle 400 is formed to be adjustable in length, to thereby allow the handle 400 to be used in common in the stroller 1, the bicycle 2, and the kickboard 3.

According to an embodiment of the present invention, the moving structure 300 of the bicycle 2 includes a saddle frame 350. The saddle frame 350 is coupled to the drive frame 330. The saddle frame 350 is separated and stored separately when the moving structure 300 is used as a moving means of the stroller 1, and is coupled to the drive frame 330 when used as a bicycle 2.

The saddle frame 350 may have a horizontal plate 352 and a vertical plate 353 having a predetermined length, and may be formed in an a '¬' shape. The horizontal plate 352 and the vertical plate 353 are connected to each other by a hinge 354.

The saddle frame 350 includes a coupling flange 351 for coupling with the drive frame 330. A coupling flange 351 coupled to the side of the front wheel coupling portion 342 is formed at the end portion of the horizontal plate 352, and a coupling flange 351 coupled to the guide frame 331 is formed at the end of the vertical plate 352. The coupling flange 351 has a fastening hole, and the drive frame 330 has a fastening hole at a portion that is coupled with the coupling flange 351.

Since the horizontal plate 352 and the vertical plate 353 are connected to the hinge 354, they are foldable to each other. Therefore, when used as a stroller 1 or a kickboard 3, the saddle frame 350 is separated from the moving structure 300 and completely folded and stored, while at the time of use, it can be spread in a'¬' shape and fixed to the drive frame 330 using a fastening member such as a bolt.

It includes a saddle s coupled to the saddle frame 350 when used as a bicycle 2, and the horizontal plate 352 is formed with a saddle coupling hole for fixing the saddle s. A plurality of saddle coupling holes are formed along the length direction of the horizontal plate 352 so that the saddle s can be arranged and fixed in an appropriate position according to the user's physical condition.

When used as a stroller 1, the footboard f provided on the upper end 343 of the front wheel coupling portion 342 may be used as a saddle s in the three-wheeled bicycle 2. By separating the footrest f coupled to the upper end portion 343 of the front wheel coupling portion 342 and fixing it to the saddle frame 370, it becomes the saddle s of the three-wheeled bicycle 2.

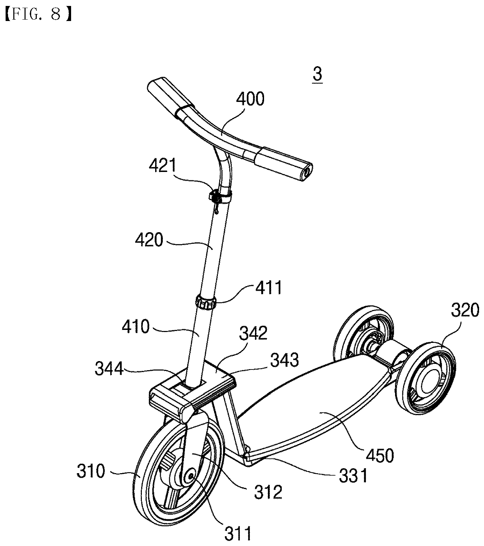

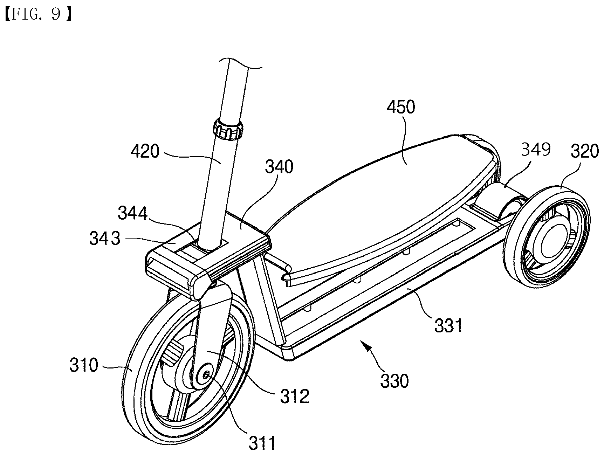

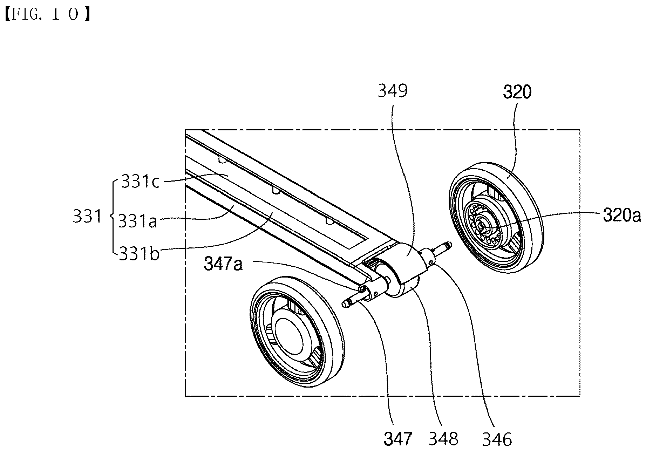

FIG. 8 is a perspective view showing a kickboard 3 converted from the stroller 1 according to the present invention, FIG. 9 is an exploded perspective view showing a coupling state of the kickboard footboard 450 and the guide frame 331 of the kickboard 3, and FIG. 10 is an exploded perspective view showing a state in which the rear wheels 320 are coupled to the rear wheel coupling portions 345 of the drive frame 330 when used as the kickboard 3 according to the present invention.

The process of converting the stroller 1 according to the present invention into a kickboard 3 will be described below with reference to FIG. 8.

In order to convert from the stroller 1 shown in FIG. 1 to the kickboard 3, first, the seat portion 100 and the support frame 200 are separated from the moving structure 300. When separating the support frame 200 from the moving structure 300, the roller 332 and the joint portion 333 supporting the second frame 222 so as to be movable with respect to the guide frame 230 may be separated together. The rear wheel connecting shaft 321 is separated from the rear wheel coupling portion 345, and the rear wheel 320 is directly coupled to the coupling shaft portion 346 of the rear wheel coupling portion 345.

The moving structure 300 for the kickboard 2 includes a drive frame 330, a front wheel 310 coupled to the support fork 312 and installed on the front wheel coupling portion 342, and a rear wheel 320 coupled to the rear wheel coupling portion 345. When compared with the moving structure 300 for the stroller 1, it is a state in which the roller 332, the joint portion 333, the rear wheel connecting shaft 321, and the frame connecting mechanism 322 are removed.

As shown in FIG. 8, when trying to convert the moving structure 300 into a kickboard 3 and using it, a handle 400 is coupled to the handle coupling portion 344 provided at the upper end 343 of the front wheel coupling portion 342.

The handle 400 may be coupled to the handle coupling portion 344 in a state in which the steering shafts 410 and 420 are coupled to the lower end. The handle 400 and the steering shafts 410 and 420 are the same as described in the method of converting the stroller 1 into a three-wheeled bicycle 2.

Referring to FIG. 9, on the guide frame 331, the kickboard footboard 450 on which a passenger's feet can be placed may be installed. The guide frame 331 may be inserted and fixed in a groove formed as a lower surface of the kickboard footboard 450.

FIG. 10 is a view for explaining a manner in which the rear wheel 320 is coupled to the rear wheel coupling portion 345 of the drive frame 330 when converting the stroller 1 into the kickboard 3 according to an embodiment of the present invention.

The rear wheels 320 are respectively coupled to the first shaft 347 penetrating the coupling shaft portions 346 on both sides of the rear wheel coupling portion 345. At this time, the first shaft 347 located at the central portion of the coupling shaft portion 346 is inserted into the central hole of the rear wheel 320. A coupling key 347a may be formed in the first shaft 347, and a key groove 320a corresponding to the coupling key may be formed in a central hole of the rear wheel 320. The coupling key 347a is fixed to the key groove 325a of the rear wheel 320 so that the rear wheel 320, the first shaft 337, and the brake wheel 348 rotate together.

Therefore, by pushing the pressing plate 349 and applying a braking force to the brake wheel 348, the rear wheel 320 can be braked.

When converting the stroller into a kickboard, it is not excluded that the brake wheel 348 directly serves as the rear wheel of the kickboard. In this case, the rear wheels 320 are not coupled.

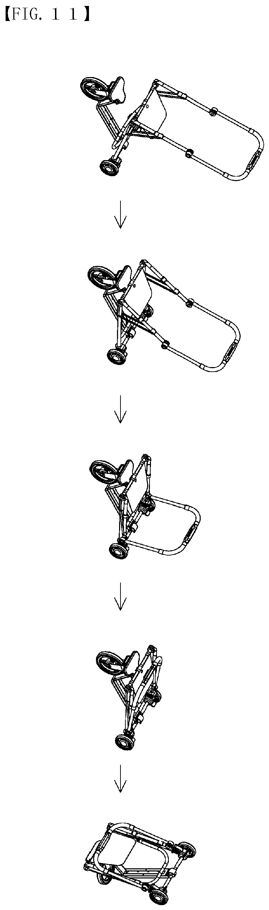

FIG. 11 is a view showing a folding operation sequence of the stroller 1 according to the present invention.

Referring to FIG. 9, the folding operation of the stroller 1 will be described as follows.

In order to show the folding operation of the support frame 200, it is shown in a state in which the seat portion 100 is removed from the stroller 1.

First, the second frame 222 of the lower support frame 220 slidingly moves backward along the guide frame 331. Since the second frame 222 is coupled through the roller 332 and the joint portion 333 installed in the guide frame 331, it is possible to slidingly move backward along the guide frame 331 together with the rollers 332.

At this time, the locking device 232 of the frame support 230 that is supported between the upper support frame 210 and the lower support frame 220 in the support frame 200 and maintains the fixed state is unlocked. When the upper end of the frame support 230 slidingly moves along the upper support frame 210 in the direction of the handle 211 by unlocking the locking device 232 provided on the frame support 230, the upper support frame 210 can be folded with respect to the lower support frame 220 while the hinge part 240 is rotating.

At the same time, the lever 212 of the handle 211 located on the upper support frame 210 is operated so that the divided portion of the upper support frame 210 can be folded by the hinge part 241.

At this time, the handle 211 may be completely folded in the direction in which the upper support frame 210 is folded.

The front wheel 310 is rotated to a predetermined angle, and then the front wheel 310 and the footboard f are utilized as a support so that it can be erected.

In this way, the stroller 1 according to the present invention can be easily folded and stored.

The stroller 1 according to the present invention optionally separates the support frame 200 on which the seat portion 100 is mounted from the stroller 1, and some components is separated from the moving structure 300, or the position can be changed and some components are additionally assembled, thereby converting a three-wheeled bike 2 or a kickboard 3.

The drive frame 330 of the moving structure 300 may be used in a stroller 1, a three-wheeled bicycle 2, or a kickboard 3. When an infant who used a stroller 1 grows and needs a bicycle 2 or a kickboard 3, the stroller 1 can be used as a three-wheeled bicycle 2 or a kickboard 3 without discarding the whole, so that it is possible to save resources and reduce environmental pollution.

**<Description of Reference Numerals>**

| | |
|---|---|
| 100: seat portion | 110: seat |
| 120: footboard | |
| 200: support frame | |
| 210: upper support frame | 211: handle |
| 212: lever | |
| 220: lower support frame | 221: first frame |
| 222: second frame | |
| 230: frame support | 232: locking device |
| 240: hinge part | |
| 300: moving structure | 310: front wheel |
| 311: front wheel central axis | 312: support fork |
| 320: rear wheel | 321: rear wheel connecting shaft |
| 322: frame connecting mechanism | |
| 322a: rear wheel locking portion | |
| 322b: suspension | |
| 325: shaft coupling portion | |
| 330: drive frame | 331: guide frame |
| 331a: first guide portion | 331b: second guide portion |
| 331c: moving guide hole | |
| 332: roller | 333: joint portion |
| 338: second shaft | |
| 342: front wheel coupling portion | 343: upper end portion |
| 344: handle coupling portion | |
| 345: rear wheel coupling portion | |
| 346: coupling shaft portion | 347: first shaft |
| 348: brake wheel | 349: pressing plate |
| 350: saddle frame | 351: coupling flange |
| 352: horizontal plate | 353: vertical plate |
| 354: hinge | 400: handle |
| 410,420: steering shaft | 450: kickboard footboard |
| f: footboard | s: saddle |

## Claims

1. A stroller (332) comprising:
a seat portion (100) including a seat (110);
a support frame (200) including an upper support frame (210) supporting the seat (110), a lower support frame (220) rotatably connected to the upper support frame (210) by a hinge portion (240), and a frame support (230) that maintains a fixed state between the upper support frame (210) and the lower support frame (220);
a moving structure (300) to which the support frame (200) is detachably connected, the moving structure (300) including a guide frame (331) that allows the lower support frame (220) to fold and support and is extended in the length direction, a drive frame (330) including a front wheel coupling portion (342) connected in a '┌' shape to the front part of the guide frame (331) and a rear wheel coupling portion (345) having coupling shaft portions (346) formed on both sides of the rear end of the guide frame (331), a front wheel (310) supported by a support fork (312) to be installed on the front wheel coupling portion (342), and a rear wheel (320) installed on the rear wheel coupling portion (345) through a rear wheel connecting shaft (321); and
the lower support frame (220) includes a first frame (221) rotatably connected to the upper support frame (210) by the hinge portion (240), and a second frame (222) rotatably hinged to the first frame (221), and
the frame support (230) is installed between the upper support frame (210) and the first frame (221) of the lower support frame (220), and **characterized in that** the stroller (332) further comprises a frame connecting mechanism (322) which is installed on the rear wheel connecting shaft (321) and to which the first frame (221) of the lower support frame (220) is fixed, and
wherein the lower end of the frame support (230) is rotatably supported by a hinge (231) on the lower support frame (220).

2. The stroller (332) according to claim 1, wherein the second frame (222) is slidably mounted on the guide frame (331) and supported to be foldable with respect to the first frame (221).

3. The stroller (332) according to claim 2, wherein
the guide frame (331) includes a moving guide ball (331c) to guide:
a first guide portion (331a) extending in the length direction and receiving a roller (332) to be movable in the front-rear direction therein, a second guide portion (331b) coupled to an upper portion of the first guide portion (331a), and a joint portion (333) having a coupling sleeve to which the second frame (222) of the lower support frame (220) and the roller (332) are coupled,

4. The stroller (332) according to claim 1, wherein the support fork (312) is formed in a module shape in which the front wheel (310) is coupled, and is detachably coupled to the upper end part of the front wheel coupling portion (342), and
the support fork (312) includes a pair of support fork (312) portions and thus a pair of front wheels (310) is installed.

5. The stroller (332) according to claim 2, wherein a locking device (232) slidably mounted on the upper support frame (210) is provided on the upper end of the frame support (230), and in response to the unlocking of the locking device (232), the upper end of the frame support (230) moves along the upper support frame (210).

6. The stroller (332) according to claim 5, wherein the frame connecting mechanism (322) includes:
a rear wheel locking portion (322a) inserted and installed into the rear wheel connecting shaft (321) and connected to the rear wheel (320) to lock the rear wheel (320), and a suspension (322b) that is formed integrally with the rear wheel locking portion (322a), is coupled to the lower end of the first frame (221), and supports the first frame (221) in a buffer manner.

7. The stroller (332) according to claim 1, wherein the rear wheel coupling portion (345) includes:
a first shaft (347) extending between the coupling shaft portions (346), and having both ends extending outward through the center of the coupling shaft portions (346);
a brake wheel (348) rotatably installed on the first shaft (347); and
a pressing plate (349) hingedly connected to the guide frame (331), disposed at the upper portion of the brake wheel (348), and selectively contacting the brake wheel (348) to enable braking of the brake wheel (348).

8. The stroller (332) according to claim 7, wherein the rear wheel connecting shaft (321) has a shaft coupling portion (325) integrally coupled with the coupling shaft portion (346) at one side end, and has a second shaft (338) rotating at the other side end, and the rear wheel (320) is coupled to the second shaft (338).

9. The stroller (332) according to claim 1, wherein the upper frame is divided into two and foldably connected by a hinge portion, and an upper handle (211) provided at the upper end of the upper frame is provided with a lever (212) for controlling the rotation of the hinge portion of the divided portion

10. The stroller (332) according to claim 1, wherein the upper end portion (343) of the drive frame (330) is provided with a handle coupling portion (344) to which a handle (400) enabling steering of the support fork (312) can be coupled.

11. The stroller (332) according to claim 10, wherein the moving structure (300) further includes a saddle frame (350) coupled to the drive frame (330) in a state in which the support frame (200) is separated, and a saddle (s) coupled to the saddle frame (350),
the support fork (312) further includes a footboard (120) connected to the central axis of the front wheel (310), and
the handle is coupled to the handle coupling portion (344), and can be used as a three-wheeled bicycle.

12. The stroller (332) according to claim 10, wherein the saddle frame (350) includes a horizontal plate (352) and a vertical plate (353) hingedly connected to the horizontal plate (352), and is formed in a form that can be folded and stored when not in use.

13. The stroller (332) according to claim 7, wherein the moving structure (300) is configured such that the rear wheel (320) is directly connected to the rear wheel coupling portion (345) of the drive frame (330) in a state in which the support frame (200) is separated, the rear wheel (320) being installed to rotate together with the first shaft (347),
the upper end portion (343) of the drive frame (330) is provided with a handle coupling portion (344) to which a handle (400) enabling steering of the support fork (312) can be coupled, and
the handle is coupled to the handle coupling portion (344), and the stroller thus can be used as a kickboard.

14. The stroller (332) according to claim 13, further comprising a kickboard footboard (450) inserted into the guide frame (331).

15. The stroller (332) according to claim 10 or claim 12, wherein the handle has a height-adjustable multi-stage steering shaft (410) at a lower end, and a lower end of the steering shaft (410) is coupled to the handle coupling portion (344)

16. The stroller (332) according to claim 10 or claim 12, wherein the handle (400) includes a grip portion (401) formed to be adjustable in length at both ends,
a handle fixing portion (111) is formed in the seat portion to allow the handle (400) to be fixed and used as a safety bar, and
the handle is coupled to the handle fixing portion (111) or the handle coupling portion (344).

## Patentansprüche

1. Ein Kinderwagen (332), aufweisend:
einen Sitzabschnitt (100) aufweisend einen Sitz (110);
einen Stützrahmen (200), der einen oberen Stützrahmen (210), der den Sitz (110) stützt, einen unteren Stützrahmen (220), der durch einen Scharnierabschnitt (240) drehbar mit dem oberen Stützrahmen (210) verbunden ist, und eine Rahmenstütze (230), die einen festen Zustand zwischen dem oberen Stützrahmen (210) und dem unteren Stützrahmen (220) aufrechterhält, umfasst,
eine bewegliche Struktur (300), mit der der Stützrahmen (200) lösbar verbunden ist, wobei die bewegliche Struktur (300) umfasst: einen Führungsrahmen (331), der es ermöglicht, den unteren Stützrahmen (220) zu falten und zu stützen, und der in der Längsrichtung verlängert ist, einen Antriebsrahmen (330), der einen Vorderradkupplungsabschnitt (342), der in einer Form '┌' mit dem vorderen Teil des Führungsrahmens (331) verbunden ist, und einen Hinterradkupplungsabschnitt (345) umfasst, der aufweist: Kupplungswellenabschnitte (346), die auf beiden Seiten des hinteren Endes des Führungsrahmens (331) ausgebildet sind, ein Vorderrad (310), das von einer Stützgabel (312) getragen ist, um auf dem Vorderradkupplungsabschnitt (342) installiert zu werden, und ein Hinterrad (320), das auf dem Hinterradkupplungsabschnitt (345) durch eine Hinterradverbindungswelle (321) installiert ist, und
der untere Stützrahmen (220) umfasst einen ersten Rahmen (221), der durch den Scharnierabschnitt (240) drehbar mit dem oberen Stützrahmen (210) verbunden ist, und einen zweiten Rahmen (222), der drehbar an dem ersten Rahmen (221) angelenkt ist, und
die Rahmenstütze (230) ist zwischen dem oberen Stützrahmen (210) und dem ersten Rahmen (221) des unteren Stützrahmens (220) angebracht, und
**dadurch gekennzeichnet, dass** der Kinderwagen (332) ferner einen Rahmenverbindungsmechanismus (322) aufweist, der an der Hinterradverbindungswelle (321) installiert ist und an dem der erste Rahmen (221) des unteren Stützrahmens (220) befestigt ist, und
wobei das untere Ende der Rahmenstütze (230) durch ein Scharnier (231) am unteren Stützrahmen (220) drehbar gelagert ist.

2. Der Kinderwagen (332) nach Anspruch 1, wobei der zweite Rahmen (222) verschiebbar am Führungsrahmen (331) angebracht und gegenüber dem ersten Rahmen (221) faltbar gelagert ist.

3. Der Kinderwagen (332) nach Anspruch 2, wobei
der Führungsrahmen (331) eine bewegliche Führungskugel (331c) zur Führung von Folgenden umfasst:
einem ersten Führungsabschnitt (331a), der sich in der Längsrichtung erstreckt und eine Rolle (332) aufnimmt, um darin in der Vorwärts-Rückwärts-Richtung beweglich zu sein, einem zweiten Führungsabschnitt (331b), der mit einem oberen Abschnitt des ersten Führungsabschnitts (331a) gekoppelt ist, und einem Verbindungsabschnitt (333) mit einer Kupplungsmuffe, mit der der zweite Rahmen (222) des unteren Stützrahmens (220) und die Rolle (332) gekoppelt sind.

4. Der Kinderwagen (332) nach Anspruch 1, wobei die Stützgabel (312) in einer Modulform ausgebildet ist, in der das Vorderrad (310) gekoppelt ist, und lösbar mit dem oberen Endteil des Vorderradkupplungsabschnitts (342) gekoppelt ist, und
die Stützgabel (312) ein Paar von Stützgabelabschnitten (312) umfasst und somit ein Paar von Vorderrädern (310) installiert ist.

5. Der Kinderwagen (332) nach Anspruch 2, wobei am oberen Ende der Rahmenstütze (230) eine am oberen Stützrahmen (210) verschiebbar gelagerte Verriegelungsvorrichtung (232) vorgesehen ist und sich das obere Ende der Rahmenstütze (230) in Reaktion auf die Entriegelung der Verriegelungsvorrichtung (232) entlang des oberen Stützrahmens (210) bewegt.

6. Der Kinderwagen (332) nach Anspruch 5, wobei der Rahmenverbindungsmechanismus (322) umfasst:
einen Hinterradverriegelungsabschnitt (322a), der in die Hinterradverbindungswelle (321) eingesetzt und installiert ist und mit dem Hinterrad (320) verbunden ist, um das Hinterrad (320) zu verriegeln, und eine Aufhängung (322b), die einstückig mit dem Hinterradverriegelungsabschnitt (322a) ausgebildet ist, an das untere Ende des ersten Rahmens (221) gekoppelt ist und den ersten Rahmen (221) in einer Pufferweise stützt.

7. Der Kinderwagen (332) nach Anspruch 1, wobei der Hinterradkupplungsabschnitt (345) umfasst:
eine erste Welle (347), die sich zwischen den Kupplungswellenabschnitten (346) erstreckt und deren beide Enden sich durch die Mitte der Kupplungswellenabschnitte (346) nach außen erstrecken;
ein Bremsrad (348), das drehbar auf der ersten Welle (347) angebracht ist, und
eine Druckplatte (349), die gelenkig mit dem Führungsrahmen (331) verbunden ist, am oberen Abschnitt des Bremsrads (348) angeordnet ist und selektiv das Bremsrad (348) berührt, um das Bremsen des Bremsrads (348) zu ermöglichen.

8. Der Kinderwagen (332) nach Anspruch 7, wobei die Hinterradverbindungswelle (321) einen Wellenkupplungsabschnitt (325) aufweist, der an einem Seitenende einstückig mit dem Kupplungswellenabschnitt (346) gekoppelt ist, und eine zweite Welle (338) aufweist, die an dem anderen Seitenende dreht, und das Hinterrad (320) mit der zweiten Welle (338) gekoppelt ist.

9. Der Kinderwagen (332) nach Anspruch 1, wobei der obere Rahmen in zwei Teile geteilt und durch einen Scharnierabschnitt faltbar verbunden ist, und ein oberer Griff (211), der am oberen Ende des oberen Rahmens vorgesehen ist, mit einem Hebel (212) zum Steuern der Drehung des Scharnierabschnitts des geteilten Abschnitts versehen ist.

10. Der Kinderwagen (332) nach Anspruch 1, wobei der obere Endabschnitt (343) des Antriebsrahmens (330) mit einem Griffkupplungsabschnitt (344) versehen ist, an den ein Griff (400) gekoppelt werden kann, der die Steuerung der Stützgabel (312) ermöglicht.

11. Der Kinderwagen (332) nach Anspruch 10, wobei die bewegliche Struktur (300) weiterhin einen Sattelrahmen (350), der mit dem Antriebsrahmen (330) in einem Zustand gekoppelt ist, in dem der Stützrahmen (200) getrennt ist, und einen Sattel (s), der mit dem Sattelrahmen (350) gekoppelt ist (sind), umfasst,
die Stützgabel (312) ferner ein Fußbrett (120) aufweist, das mit der Mittelachse des Vorderrades (310) verbunden ist, und
der Griff ist mit dem Griffkupplungsabschnitt (344) verbunden und kann als dreirädriges Fahrrad verwendet werden.

12. Der Kinderwagen (332) nach Anspruch 10, wobei der Sattelrahmen (350) eine horizontale Platte (352) und eine vertikale Platte (353) umfasst, die gelenkig mit der horizontalen Platte (352) verbunden ist, und in einer Form ausgebildet ist, die zusammengefaltet und gelagert sein kann, wenn sie nicht in Gebrauch ist.

13. Der Kinderwagen (332) nach Anspruch 7, wobei die bewegliche Struktur (300) so eingerichtet ist, dass das Hinterrad (320) in einem Zustand, in dem der Stützrahmen (200) getrennt ist, direkt mit dem Hinterradkupplungsabschnitt (345) des Antriebsrahmens (330) verbunden ist, wobei das Hinterrad (320) installiert ist, um sich zusammen mit der ersten Welle (347) zu drehen,
der obere Endabschnitt (343) des Antriebsrahmens (330) mit einem Griffkupplungsabschnitt (344) versehen ist, an den ein Griff (400) gekoppelt sein kann, der die Steuerung der Stützgabel (312) ermöglicht, und
der Griff ist mit dem Griffkupplungsabschnitt (344) verbunden, und der Kinderwagen kann somit als Schwimmbrett verwendet werden.

14. Der Kinderwagen (332) nach Anspruch 13, der ferner ein Schwimmbrett-Fußbrett (450) aufweist, das in den Führungsrahmen (331) eingesetzt ist.

15. Der Kinderwagen (332) nach Anspruch 10 oder Anspruch 12, wobei der Griff an einem unteren Ende eine höhenverstellbare mehrstufige Lenkwelle (410) aufweist und ein unteres Ende der Lenkwelle (410) mit dem Griffkupplungsabschnitt (344) gekoppelt ist.

16. Der Kinderwagen (332) nach Anspruch 10 oder Anspruch 12, wobei der Griff (400) einen Griffabschnitt (401) aufweist, der so ausgebildet ist, dass er an beiden Enden in der Länge verstellbar ist,
ein Griffbefestigungsabschnitt (111) in dem Sitzabschnitt ausgebildet ist, um die Befestigung und Verwendung des Griffs (400) als Sicherheitsstange zu ermöglichen, und
der Griff ist mit dem Griffbefestigungsabschnitt (111) oder dem Griffkupplungsabschnitt (344) verbunden.

## Revendications

1. Poussette (332) comprenant :
une portion de siège (100) comportant un siège (110) ;
un cadre de support (200) comportant un cadre de support supérieur (210) supportant le siège (110), un cadre de support inférieur (220) relié de manière rotative au cadre de support supérieur (210) par une portion de charnière (240), et un support de cadre (230) qui maintient un état fixe entre le cadre de support supérieur (210) et le cadre de support inférieur (220) ;
une structure mobile (300) à laquelle le cadre de support (200) est relié de manière détachable, la structure mobile (300) comportant un cadre de guidage (331) qui permet au cadre de support inférieur (220) de se plier et de supporter et qui est étendu dans la direction de la longueur, un cadre d'entraînement (330) comportant une portion de couplage de roue avant (342) reliée en forme '┌' de à la partie avant du cadre de guidage (331) et une portion de couplage de roue arrière (345) présentant des portions d'arbre de couplage (346) formées des deux côtés de l'extrémité arrière du cadre de guidage (331), une roue avant (310) supportée par une fourche de support (312) à installer sur la portion de couplage de roue avant (342), et une roue arrière (320) installée sur la portion de couplage de roue arrière (345) par l'intermédiaire d'un arbre de liaison de roue arrière (321) ; et
le cadre de support inférieur (220) comporte un premier cadre (221) relié de manière rotative au cadre de support supérieur (210) par la portion de charnière (240), et un second cadre (222) articulé de manière rotative au premier cadre (221), et
le support de cadre (230) est installé entre le cadre de support supérieur (210) et le premier cadre (221) du cadre de support inférieur (220) ; et
**caractérisée en ce que** la poussette (332) comprend en outre un mécanisme de liaison de cadre (322) qui est installé sur l'arbre de liaison de roue arrière (321) et auquel le premier cadre (221) du cadre de support inférieur (220) est fixé, et
dans laquelle l'extrémité inférieure du support de cadre (230) est supportée de manière rotative par une charnière (231) sur le cadre de support inférieur (220).

2. Poussette (332) selon la revendication 1, dans laquelle le second cadre (222) est monté de manière coulissante sur le cadre de guidage (331) et supporté pour être pliable par rapport au premier cadre (221).

3. Poussette (332) selon la revendication 2, dans laquelle
le cadre de guidage (331) comporte une boule de guidage mobile (331c) pour guider :
une première portion de guidage (331a) qui s'étend dans la direction de la longueur et qui accueille un rouleau (332) à déplacer dans la direction avant-arrière de celle-ci, une seconde portion de guidage (331b) couplée à une portion supérieure de la première portion de guidage (331a), et une portion de jonction (333) présentant un manchon de couplage auquel le second cadre (222) du cadre de support inférieur (220) et le rouleau (332) sont couplés.

4. Poussette (332) selon la revendication 1, dans laquelle la fourche de support (312) présente une forme de module dans laquelle la roue avant (310) est couplée, et est couplée de manière détachable à la partie d'extrémité supérieure de la portion de couplage de roue avant (342), et
la fourche de support (312) comporte une paire de portions de fourche de support (312) et ainsi une paire de roues avant (310) est installée.

5. Poussette (332) selon la revendication 2, dans laquelle un dispositif de verrouillage (232) monté de manière coulissante sur le cadre de support supérieur (210) est prévu sur l'extrémité supérieure du support de cadre (230), et en réponse au déverrouillage du dispositif de verrouillage (232), l'extrémité supérieure du support de cadre (230) se déplace le long du cadre de support supérieur (210).

6. Poussette (332) selon la revendication 5, dans laquelle le mécanisme de liaison de cadre (322) comporte :
une portion de verrouillage de roue arrière (322a) insérée et installée dans l'arbre de liaison de roue arrière (321) et reliée à la roue arrière (320) pour verrouiller la roue arrière (320), et une suspension (322b) qui est intégralement formée avec la portion de verrouillage de roue arrière (322a), est couplée à l'extrémité inférieure du premier cadre (221), et supporte le premier cadre (221) de manière tampon.

7. Poussette (332) selon la revendication 1, dans laquelle la portion de couplage de roue arrière (345) comporte :
un premier arbre (347) qui s'étend entre les portions d'arbre de couplage (346), et qui présente deux extrémités qui s'étendent vers l'extérieur à travers le centre des portions d'arbre de couplage (346) ;
une roue de frein (348) installée de manière rotative sur le premier arbre (347) ; et
une plaque de pression (349) reliée de manière articulée au cadre de guidage (331), disposée au niveau de la portion supérieure de la roue de frein (348), et qui entre en contact de manière sélective avec la roue de frein (348) pour permettre le freinage de la roue de frein (348).

8. Poussette (332) selon la revendication 7, dans laquelle l'arbre de liaison de roue arrière (321) présente une portion de couplage d'arbre (325) couplée intégralement avec la portion d'arbre de couplage (346) à une extrémité latérale, et présente un second arbre (338) qui tourne au niveau de l'autre extrémité latérale, et la roue arrière (320) est couplée au second arbre (338).

9. Poussette (332) selon la revendication 1, dans laquelle le cadre supérieur est divisé en deux et relié de manière pliable par une portion de charnière, et une poignée supérieure (211) prévue au niveau de l'extrémité supérieure du cadre supérieur est prévue avec un levier (212) pour commander la rotation de la portion de charnière de la portion divisée.

10. Poussette (332) selon la revendication 1, dans laquelle la portion d'extrémité supérieure (343) du cadre d'entraînement (330) est prévue avec une portion de couplage de poignée (344) à laquelle une poignée (400) permettant d'orienter la fourche de support (312) peut être couplée.

11. Poussette (332) selon la revendication 10, dans laquelle la structure mobile (300) comporte en outre un cadre de selle (350) couplé au cadre d'entraînement (330) dans un état dans lequel le cadre de support (200) est séparé, et une selle (s) couplée au cadre de selle (350),
la fourche de support (312) comporte en outre un marchepied (120) relié à l'axe central de la roue avant (310), et
la poignée est couplée à la portion de couplage de poignée (344), et peut être utilisée comme une bicyclette à trois roues.

12. Poussette (332) selon la revendication 10, dans laquelle le cadre de selle (350) comporte une plaque horizontale (352) et une plaque verticale (353) reliée de manière articulée à la plaque horizontale (352), et est formé sous une forme qui peut être pliée et rangée lorsqu'il n'est pas utilisé.

13. Poussette (332) selon la revendication 7, dans laquelle la structure mobile (300) est configurée de sorte que la roue arrière (320) soit directement reliée à la portion de couplage de roue arrière (345) du cadre d'entraînement (330) dans un état dans lequel le cadre de support (200) est séparé, la roue arrière (320) étant installée pour tourner conjointement avec le premier arbre (347),
la portion d'extrémité supérieure (343) du cadre d'entraînement (330) est prévue avec une portion de couplage de poignée (344) à laquelle une poignée (400) permettant d'orienter la fourche de support (312) peut être couplée, et
la poignée est couplée à la portion de couplage de poignée (344), et la poussette peut ainsi être utilisée comme trottinette.

14. Poussette (332) selon la revendication 13, comprenant en outre un marchepied de trottinette (450) inséré dans le cadre de guidage (331).

15. Poussette (332) selon la revendication 10 ou la revendication 12, dans laquelle la poignée présente un arbre d'orientation à plusieurs étages réglable en hauteur (410) au niveau d'une extrémité inférieure, et une extrémité inférieure de l'arbre d'orientation (410) est couplée à la portion de couplage de poignée (344).

16. Poussette (332) selon la revendication 10 ou la revendication 12, dans laquelle la poignée (400) comprend une portion de préhension (401) formée pour être réglable en longueur aux deux extrémités,
une portion de fixation de poignée (111) est formée dans la portion de siège pour permettre à la poignée (400) d'être fixée et utilisée comme une barre de sécurité, et
la poignée est couplée à la portion de fixation de poignée (111) ou à la portion de couplage de poignée (344).
